# EUROPEAN PATENT APPLICATION

(11) **EP 2 574 780 A1**
(43) Date of publication of application: **03.04.2013**
(21) Application number: 11183525.2
(22) Date of filing: 30.09.2011
(51) Int. Cl.: F03D 11/00, F16B 13/06

(54) **Arrangement for fixing a component inside of a wind turbine**

(71) Applicant: Siemens Aktiengesellschaft, 80333 München (DE)
(72) Inventor: Olesen, Joern, 7100 Vejle (DK)

(57) **Abstract**

The invention relates to an arrangement comprising a portion of a tower (3) and an expandable fastener (5). The expandable fastener (5) comprises a first part (1) and a second part (2) and the portion of the tower (3) is a portion of a wind turbine tower, wherein the portion of the tower (3) comprises a blind hole (4). The first part (1) of the expandable fastener (5) is inserted into the blind hole (4) and connected thereto by traction. The second part (2) of the expandable fastener protrudes the portion of the tower (3) and is connectable to a component (10, 11).

## Description

The present invention relates to an arrangement for fixing a component inside of a wind turbine. The invention further relates to a method for constructing such an arrangement.

Wind turbines comprise support structures to which a nacelle holding a generator and a hub with rotor blades is mounted.

The support structures are most commonly tubular towers tapering in both, in wall thickness and in diameter from tower base to tower top.

Large wind turbines comprise, in general, tower sections, e.g. with a length of 10 to 30 meters, and the complete tower can reach heights of more than 100 meters.

Often, the towers are steel towers, but concrete towers, concrete bases with steel upper sections and shell towers, are also used.

Inside of a tower, components like ladders or lifts provide access to the nacelle for carrying out service, maintenance and repair work. Furthermore, a wind turbine tower houses power and signal cables for transmitting electric power and signals from the generator and other wind turbine components to different receivers.

Components such as a ladder, guiding rails or ropes of an elevator as well as cable trays have to be fixed to the tower to avoid excessive movement. For this reason multiple mechanical connections between the tower and these components have to be established. Different fastening techniques and fasteners are used.

In some places inside of the tower, exchanging or replacing of those fasteners may be needed to fix another type of component or to replace an older or broken fastener.

Known detachable fasteners are thread-bolts. These require drilling of through-holes into the wind turbine tower. Small cracks can be initialized on the edge of the holes which may extend under mechanical loads on the tower arising from wind, gust and rotation of rotor and blades. The holes are also delicate with environmental influences and are prone to corrosion as a protective paint layer is missing. Furthermore, the structural stability of the tower is negatively affected by through-going holes in the tower. In addition, it is time-consuming, expensive and labor-intensive to drill the holes at precise positions of the wind turbine tower and to install bolt nut connections to fix the components. In particular, service and inspection of a thread-bolt connection from the outside of a tower is time-consuming, dangerous and expensive.

Besides, it is known to establish threaded non through-going holes in a steel tower, into which a bolt can be screwed. However, a sharp tool is needed to thread the holes and during the threading process, small cracks can emerge which, in particular under mechanical loads, can extend and decrease the stability of the wind turbine tower.

Moreover, EP1472458 discloses a method of mounting elements in a wind turbine tower by means of magnetic forces. Depending on the component to be attached, a mechanical fixation is needed to supplement the magnetical attachment of the suspension element.

It is therefore an object of the invention to provide an arrangement for fixing a component securely to the tower wall which allows for detaching the fastener, if necessary, wherein weakening of the tower structure is avoided or at least reduced compared to such arrangements known in the art. It is a further object of the invention to provide a cost-saving arrangement. It is yet a further object of the invention to provide a method for constructing such an arrangement.

The aim of the invention is achieved by the features of the independent claims. Further aspects of the invention are subject of the dependent claims.

The arrangement for fixing a component inside of a wind turbine comprises a portion of a tower and an expandable fastener fastener, wherein the portion of the tower is a portion of a wind turbine tower. The portion of the tower comprises a blind hole.
The first part of the expandable fastener fastener is inserted into the blind hole and connected thereto by traction. The second part of the expandable fastener protrudes the portion of the tower and is connectable to a component.

This arrangement is advantageous in that the expandable fastener is inexpensive.

In addition, the smooth surface of the hole and a balanced and gradual increase of traction between the expandable fastener and the surface of the hole decreases the risk of micro crack build-up and micro crack expansion.

Besides, the connection point may be flexibly arranged where ever needed inside the wind turbine, because a preparation of the surface at the connection point is not necessary. Furthermore, the expandable fastener can be taken out to be removed or replaced.

The expandable fastener works on the principle of diameter expansion, thus providing traction forces, between the first part of the expandable fastener inserted into a drilled hole and the surface of the drilled hole. In addition, a bonding agent may be arranged between the surface of the first part of the expandable fastener and the surface of the blind hole. The blind hole may also be referred to as non through-going hole.

Furthermore, the fastener is connectable to a component. Therefore, the second part of the expandable fastener may comprise an external thread which allows for connecting a component or a suspension element for suspending a component. The component or the suspension element may be attached to the expandable fastener by screwing.

According to an embodiment of the invention, the first part of the expandable fastener comprises a treated surface with the aim of enhancing the fit and improving the connection to the surface of the hole.

According to another embodiment of the invention, the portion of the tower is made of metal, for instance steel. Thus, the arrangement may be comprised in a steel or shell tower. However, an application of the expandable fastener in a concrete tower is also possible.

According to a further embodiment of the invention, a component is connected to the second part of the expandable fastener, wherein a dampening and/or spacing element, e.g. a rubber ring, is arranged between the tower portion and the component. Thus, corrosion and damage to the protective paint layer of the tower may be avoided or at least reduced.

According to yet a further embodiment of the invention, at least two expandable fasteners are used, each comprising a first part inserted into a hole of the portion of the tower and a second part protruding the portion of the tower. A component is connected to the at least two expandable fasteners. Thereby, the tower portion may also comprise at least two tower sections and each of the direct fasteners may be fixed to a different one of these sections.

The component may be a ladder, a guiding rail, a rope of an elevator, a cable tray or a part thereof. In case of the component being a ladder, the ladder may be fastened to different tower sections, for instance at least one fastener to each section. The ladder may also be fastened every 2 to 3 meters along the tower height. This allows for applying light-weight ladders, e.g. ladders made from aluminium.

A method for constructing an arrangement according to the invention comprises determining a position on a portion of the tower and drilling a hole in a portion of the tower at the determined position.

The method further comprises inserting the expandable fastener into the hole and then, expanding the expandable fastener.

This method demands less time than other comparable methods known in the art. A reason therefore is, for instance, that the surface of the tower portion does not need to be prepared before drilling and inserting the fastener.

In the following, the invention will be described by way of example in more detail.

The drawings show preferred configurations and do not limit the scope of the invention. The same reference numerals are used in the drawings for elements having the same function.
FIG 1 shows schematically an expandable fastener inserted into a hole of a tower portion
FIG 2 shows schematically an arrangement according to an embodiment of the invention
FIG 3 shows schematically an arrangement according to an embodiment of the invention with a component attached thereto
FIG 4 shows a wind turbine comprising an arrangement according to an embodiment of the invention

Referring now to the figures, embodiments of the invention are described comprising an expandable fastener 5, the first part 1 of which is expandable and the second part 2 of which is a threaded bolt 2. This expandable fastener 5 may also be referred to as anchor element or anchor bolt.

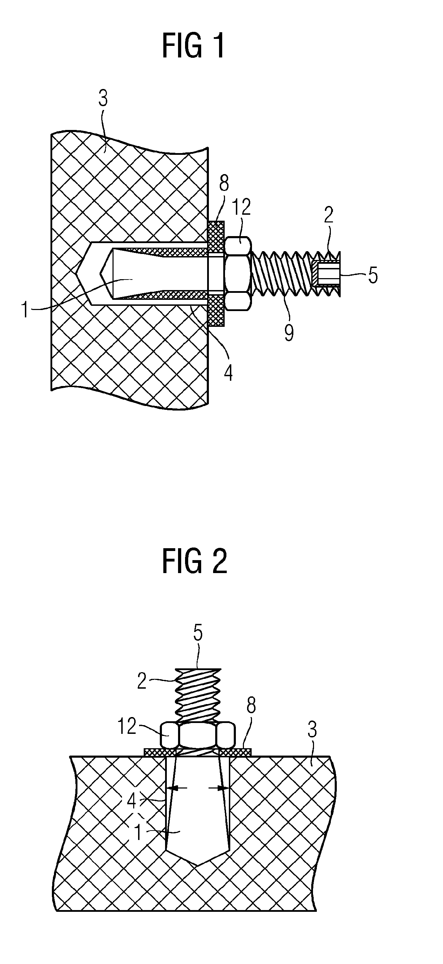

**FIG 1** shows the expandable fastener 5 inserted though not yet fastened in a pre-drilled hole 4. The pre-drilled hole 4 is a blind hole 4 which may also be referred to as blind hole.

The tower portion 3 is made of steel, but could also be made of another metallic material or concrete.

The fastener 5, shown in FIG 1, further comprises a spacing element 8, arranged close to the surface of the tower material 3, providing for a distance between the tower portion 3 and any element 12 or component connected thereto. Corrosion and damage to a protective paint layer of the tower portion 3 is thus avoided or at least reduced.

The spacing element 8 may be made of a resilient material. This provides for dampening and for reducing the structural load and, consequently, for reducing material fatigue. The spacing element 8, shown in FIG 1, is a rubber ring. Another spacing element could also be used.

Due to the spacing and/or dampening element 8, any piece 12 or component (not shown in FIG 1) which is attached to the tower portion 3 is protected against wear. The spacing and/or dampening element 8 further protects against humidity and other substances, thus against corrosion.

**FIG 2**, shows an arrangement according to an embodiment of the invention, comprising an expanded expandable fastener 5. The threaded bolt 2 is a partly externally threaded 9 for attaching a component thereto by screwing. A nut 12 may be used to fix a component or a part of a component to the threaded bolt 2.

The expandable fastener 5 is inserted into the hole 4 in a portion of the tower 3 and expanded by tightening a screw arranged at least partly inside of the threaded bolt 2.

The pre-drilled hole 4 in the tower portion 3 comprises a smooth surface which may be approximately 10mm deep, wherein the tower thickness is, depending on the height, 16 to 40 mm.

The expandable fastener 5 may exhibit a surface treatment or a surface structure which enhance the traction, i.e. the traction force, of the expandable fastener 5 in the hole 4 of the tower portion 3. In other words the traction locking connection between the expandable fastener 5 and the surface of the hole 4 is enhanced.

According to another embodiment of the invention, the hole comprising the expandable fastener 5, further comprises a bonding agent for improving the loading capacity of the expandable fastener 5.

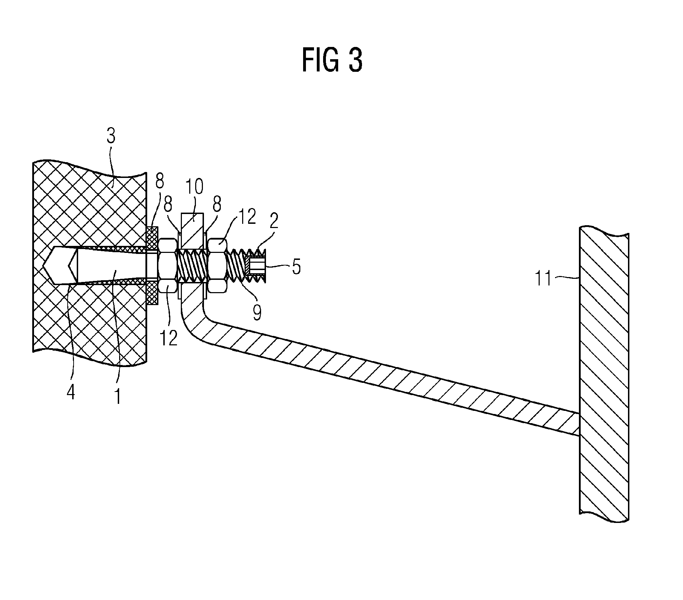

**FIG 3** shows, by way of example, an arrangement according the invention with a part of a ladder 11 attached via a ladder connector 10 to the expandable fastener 5.

As further shown in FIG 3, a first rubber ring 8, a ladder connector 10, a second rubber ring 8 and a nut 12 are placed next to one another on the threaded bolt 2.

The rubber rings 8 serve as dampener and/or spacer elements between the different pieces, e.g. between the expandable fastener 5 and ladder connector 10 or between ladder connector 10 and tower portion 3.

Furthermore, the rubber rings 8 serve as a protection against corrosion in the vicinity of the drilled hole 4 and the hole-fastener interface. Dampening also avoids mechanical stresses and the introduction and extension of micro cracks in the tower 3.

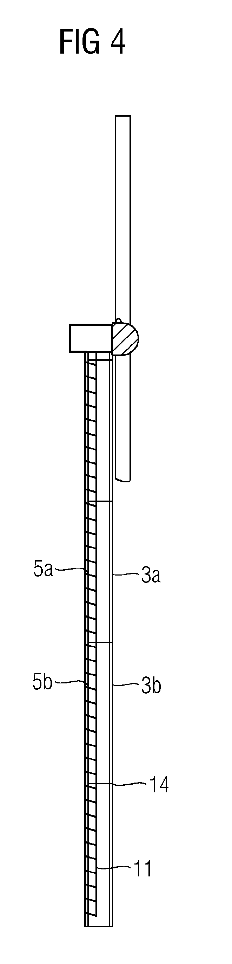

**FIG 4** shows a schematically drawing of a wind turbine, the tower 3 of which comprises several sections 3a, 3b. Each section 3a, 3b may have a hight of 10 to 30 meters. A ladder 11 is fastened to the tower 3, preferably to each tower section 3a, 3b.

Having the ladder 11 fixed to the tower every 2 to 3 meters along the height, a relatively light and flexible aluminium ladder 11 can be used while still avoiding movement, vibration or swinging. Besides, a platform 14 may be mounted between the tower section 3a, 3b.

A method for constructing an arrangement according to the invention comprises determining a position on a portion of the tower, the so-called connection point. The method further comprises drilling a blind hole 4 in the portion of the tower 3 at the determined position.

The method for constructing an arrangement according to the invention may further comprise inspecting and, when indicated, cleaning the blind hole 4 from debris and obstructing particles after drilling.

Then, the expandable fastener 5 is inserted into the hole 4 and expanded by tightening a screw in the threaded bolt 2.

Furthermore, the method may include attaching a component 10, 11 to the threaded bolt 2.

The above disclosure is illustrative only and changes may be made in detail, especially in matters of shape, size and arrangement of parts within the principles of the invention in the full extent indicated by the meaning in which the appended claims are expressed.

## Claims

1. Arrangement for fixing a component inside of a wind turbine comprising
- a portion of a tower (3) and
- an expandable fastener (5),
wherein the portion of the tower (3) is a portion of a wind turbine tower,
wherein the portion of the tower (3) comprises a blind hole (4),
wherein the expandable fastener (5) comprises a first part (1) and a second part (2),
wherein the first part (1) is inserted into the blind hole (4) and connected thereto by traction, and
wherein the second part (2) protrudes the portion of the tower (3) and is connectable to a component (10, 11).

2. Arrangement according to claim 1,
wherein a bonding agent is arranged between the surface of the first part (1) of the expandable fastener (5) and surface of the blind hole (4).

3. Arrangement according to claim 1 or claim 2,
wherein the first part (1) of the expandable fastener (5) is surface-treated in order to increase the traction.

4. Arrangement according to one of the preceding claims, wherein the second part (2) of the expandable fastener (5) comprises an external thread (9).

5. Arrangement according to one of the preceding claims, wherein the second part (2) of the expandable fastener (5) comprises an internal thread and a screw arranged inside of the internal thread.

6. Arrangement according to one of the preceding claims, wherein the portion of the tower (3) is made of metal, for instance steel.

7. Arrangement according to one of the preceding claims, wherein the portion of the tower (3) is made of concrete.

8. Arrangement according to one of the preceding claims, wherein the arrangement further comprises
- a component (10, 11) connected to the second part (2) of the expandable fastener (5).

9. Arrangement according to the preceding claim,
wherein a dampening 8 and/or spacing element 8 is arranged between the portion of the tower (3) and the component (10, 11) .

10. Arrangement according to one of the preceding claims, comprising
- at least one further expandable fastener (5b),
wherein the further expandable fastener (5b) comprises a first part and a second part,
wherein the portion of the tower (3) comprises a further blind hole,
wherein the first part of the at least one further expandable fastener (5b) is inserted into the further blind hole and connected thereto by traction,
wherein the second part of the at least one further expandable fastener (5b) protrudes the portion of the tower and is connectable to a component (10, 11), and
wherein the component (10, 11) is connected to the expandable fastener (5, 5a) and to the at least one further expandable fastener (5b).

11. Arrangement according to the preceding claim,
wherein the portion of the tower (3) comprises at least two sections (3a, 3b), and
wherein the expandable fastener (5,5a) and the further expandable fastener (5b) are inserted into different sections (3a, 3b).

12. Arrangement according to one of the preceding claims, wherein the component (10, 11) is a ladder, a guiding rail, a rope of an elevator or cable tray.

13. Method for constructing an arrangement according to one of claims 1 to 12 comprising the steps of:
determining a position on the portion of the tower (3),
drilling a blind hole (4) into the portion of the tower (3) at the determined position.
inserting the expandable fastener (5) into the hole (4), and
expanding the expandable fastener (5).

14. Method according to claim 13,
further comprising the step of:
inspecting and, when indicated, cleaning the blind hole (4) from debris and obstructing particles.

15. Method according to claim 13 to 14,
further comprising the step of:
attaching a component (10, 11) to the second part (2) of the fastener (5).
